Europäisches Patentamt

European Patent Office

Office européen des brevets

(19)

(11) Numéro de publication : **0 236 245**
**B1**

(12) # FASCICULE DE BREVET EUROPÉEN

(45) Date de publication du fascicule du brevet :
07.06.89

(21) Numéro de dépôt : 87420048.8

(22) Date de dépôt : 17.02.87

(51) Int. Cl.⁴ : **B 23 K 20/22**, B 23 K 20/24,
B 32 B 15/01

(54) **Procédé de placage à chaud par colaminage des alliages d'Al contenant du Li.**

(30) Priorité : 19.02.86 FR 8602764

(43) Date de publication de la demande :
09.09.87 Bulletin 87/37

(45) Mention de la délivrance du brevet :
07.06.89 Bulletin 89/23

(84) Etats contractants désignés :
AT BE CH DE ES GB IT LI NL SE

(56) Documents cités :
EP–A– 0 001 447
DE–A– 2 820 413
DE–A– 2 856 914
GB–A– 2 011 809

(73) Titulaire : CEGEDUR SOCIETE DE TRANSFORMA-
TION DE L'ALUMINIUM PECHINEY
23, Rue Balzac
F-75008 Paris (FR)

(72) Inventeur : Meyer, Philippe,
9, avenue Dugueyt-Jouvin
F-38500 Voiron (FR)

(74) Mandataire : Séraphin, Léon
PECHINEY 28, rue de Bonnel
F-69433 Lyon Cedex 3 (FR)

EP 0 236 245 B1

**Description**

L'invention concerne un procédé de placage des alliages d'Al contenant du lithium, par colaminage à chaud dans les conditions de réchauffage habituelles (c'est-à-dire à l'air).

On sait en effet que l'utilisation des alliages d'Al plaqués, en particulier en aéronautique, présente le double avantage de l'amélioration de l'état de surface et de la protection galvanique de l'alliage constituant l'âme par le métal ou l'alliage constituant le (ou les) placage(s) superficiel(s).

C'est ainsi que les alliages des séries 2000 ou 7000 (suivant la nomenclature de l'Aluminium Association) sont couramment plaqués, par exemple par de l'aluminium commercialement pur type A5 ou de l'AZ1 (1050A et 7072 respectivement).

Cependant ces produits plaqués doivent présenter une très bonne adhérence entre les matériaux d'âme et les placages superficiels en vue d'assurer la bonne résistance mécanique de l'ensemble.

Or, les essais de placage par colaminage à chaud d'une âme en alliage d'Al contenant du Li et de placages (appelé ici couvertures) notamment en 1050A et en 7072 se sont soldés par des échecs en raison de la non-adhérence du (ou des) placage(s) sur l'âme.

Ce phénomène est probablement dû à ce que, lors du réchauffage avant colaminage, il se produit une oxydation superficielle de l'âme, avec formation de $Li_2O$, qui s'hydrate en lithine $Li(OH)$ et réagit avec le gaz carbonique de l'atmosphère du four pour former le carbonate $Li_2CO_3$.

Tous ces produits d'oxydation empêchent la liaison métallurgique entre l'âme et la (ou les) couverture(s) lors du colaminage à chaud.

Certes, il serait possible, soit de réchauffer l'ensemble âme-couverture dans une atmosphère sèche non oxydante et même sous vide, mais cela implique des équipements tout à fait spéciaux et un contrôle délicat des atmosphères des fours, soit de souder de façon continue la (ou les) couverture(s) sur l'âme avant réchauffage, pour éviter l'oxydation interstitielle ; cependant, ces solutions sont complexes et onéreuses.

La demanderesse a résolu le problème du placage d'un alliage d'Al contenant du Li par de l'aluminium commercialement pur ou un alliage d'Al exempt de Li en utilisant des équipements de réchauffage classique (fours à air), en introduisant dans la gamme de fabrication une oxydation contrôlée de l'alliage d'âme considéré et une élimination des produits d'oxydation obtenus, avant le réchauffage de l'ensemble âme + couverture pour le colaminage.

De façon plus précise, l'oxydation du produit à plaquer est effectuée sur une surface usinée, par exemple après opération de scalpage, par chauffage dans un four à air ou dans tout autre atmosphère oxydante, dans un domaine de températures To tel que :

$$450\ ^\circ C \leqslant To \leqslant 550\ ^\circ C$$

avec de préférence $500 \leqslant To \leqslant 530\ ^\circ C$ et pendant une durée to telle que la profondeur affectée par la perte superficielle en Li soit comprise entre 50 et 700 $\mu m$ et de préférence 100 et 500 $\mu m$ et particulièrement entre 200 et 500 $\mu m$ (voir à l'exemple 1 un mode de détermination de cette profondeur). Cette durée to peut facilement être déterminée expérimentalement.

Les limites supérieures sont justifiées par le fait que le traitement d'oxydation ne doit pas être trop long pour conserver une bonne productivité ; les limites inférieures sont nécessaires à l'obtention d'une surface suffisamment appauvrie en Li pour obtenir un bon placage.

Cette oxydation est suivie d'une élimination des produits d'oxydation superficielle par tout moyen mécanique ou chimique connu en soi, tel que brossage, grenaillage, sablage, décapage, etc... La perte d'alliage doit rester inférieure à 30 $\mu m$ par face, et de préférence 10 $\mu m$ par face.

Les conditions d'élimination des produits d'oxydation peuvent être facilement déterminées de façon expérimentale, par des essais très simples (pertes de poids). Si la profondeur d'attaque dépasse 30 $\mu m$, l'adhérence du placage sur l'alliage n'est plus assurée de façon fiable.

Le réchauffage de l'ensemble âme + couverture(s) avant colaminage à chaud peut alors être effectué dans les conditions habituelles de réchauffage avant laminage, connues de l'homme de l'art, pour les alliages concernés. Cependant, en vue d'obtenir un placage hautement adhérent, il est préférable que la température de réchauffage n'excède pas 500 °C, et soit de préférence inférieure à 470 °C (et même 450 °C) et que la durée de réchauffage ne soit pas supérieure à 24 heures et de préférence inférieure à 12 heures. Ces conditions permettent d'éviter une oxydation interstitielle trop importante du complexe par la tranche et conduisent ainsi à un gain de productivité (moindres chutes de rives et d'extrémités).

L'invention sera mieux comprise à l'aide des exemples suivants illustrés par les figures 1 à 3.

La figure 1 représente le profil des teneurs en Li et Mg d'un alliage d'âme en fonction de la distance à la surface après une oxydation de 1 h 30 min à 535 °C.

La figure 2 représente une coupe micrographique dans un plan long/travers court d'un alliage 8090 plaqué A5 trempé et revenu sous forme de tôle de 1,6 mm d'épaisseur après 1 000 h en brouillard salin (exemple 2).

La figure 3 représente une coupe micrographique dans un plan long/travers court d'un alliage 2091 plaqué 7072, trempé et revenu, sous forme d'une tôle de 0,8 mm après 1 000 h en brouillard salin (exemple 3).

## Exemple 1

Détermination de la profondeur affectée par l'oxydation.

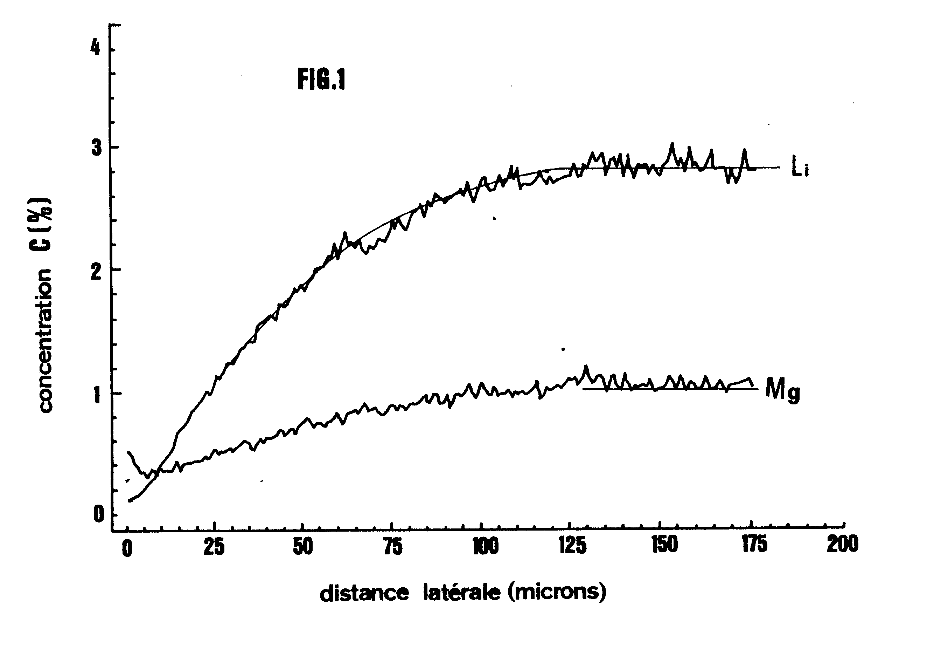

Un alliage 8090 coulé en plateau de section $800 \times 300$ mm² de composition (en poids %) : 2,8 % Li ; 1,35 % Cu ; 1,0 % Mg ; 0,12 % Zr ; 0,06 % Fe ; 0,03 % Si, reste Al, est homogénéisé 24 h à 535 °C, scalpé 15 mm/face, réchauffé 24 h à 470 °C, laminé à chaud jusqu'à 13 mm d'épaisseur. Un échantillon est prélevé, usiné sur 1 mm, mis en solution 1 h 30 à 535 °C, en four à air. Une coupe polie est effectuée perpendiculairement à la surface oxydée et on mesure au SIMS (Secondary ionic mass spectrography) la teneur en lithium et en magnésium selon la distance par rapport à la surface. Le résultat est reporté à la figure 1 ; on observe un apprauvrissement en Li sur environ 120 µm.

## Exemple 2

Un alliage 8090 de composition (en poids %) : 2,6 % Li ; 1,2 % Cu ; 1,1 % Mg ; 0,08 % Zr ; 0,06 Fe ; 0,02 Si, reste aluminium est coulé en plateau de 150 kg, de section $350 \times 150$ mm², homogénéisé 24 h à 540 °C, scalpé de 15 mm par face, oxydé 12 heures à 535 °C en four à air, immergé dans un bain d'acide nitrique froid (50 % en vol. d'acide à 36 °B) pendant 6 min, rincé à l'eau, immergé dans un bain de soude : concentration 50 g/litre ; température : 45 °C pendant 4 min (attaque de 14 µm de profondeur), rincé à l'eau, neutralisé 15 min en bain d'acide nitrique à 50 % en vol. 36 °B froid, rincé à l'eau.

Puis on dépose deux couvertures de 6 mm d'épaisseur chacune (une par grande face) d'A5 sur le plateau, maintenues par cloutage à une extrémité du plateau de 8090. L'ensemble est réchauffé 12 h à 450 °C puis laminé à chaud jusqu'à 3,2 mm, recuit 1 h 30 à 400 °C, laminé à froid jusqu'à 1,6 mm, mis en solution 15 mn à 540 °C, trempé à l'eau froide, tractionné de 2 % revenu 6 h à 170 °C.

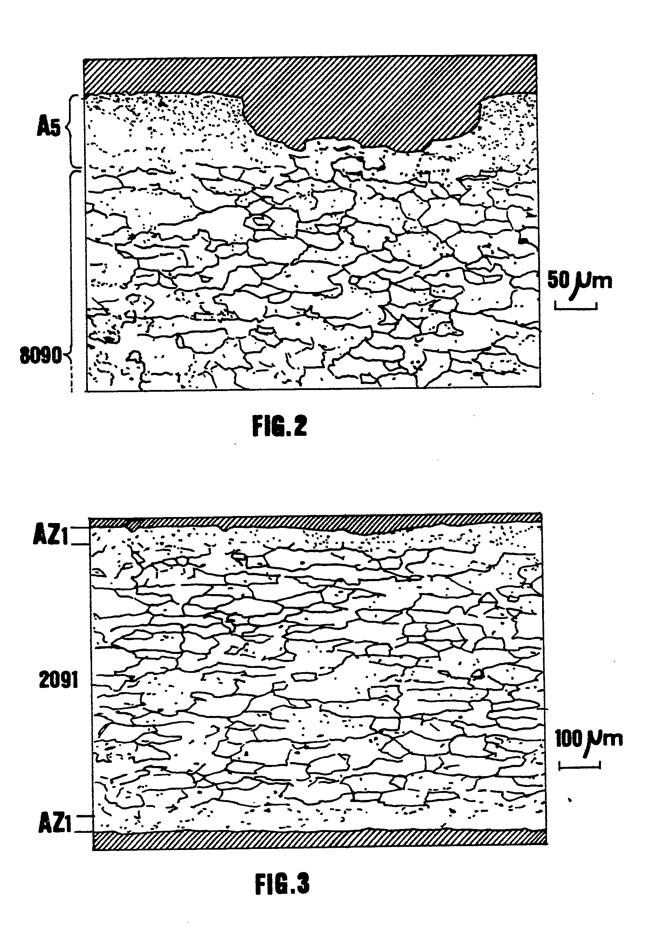

La tôle ainsi revenue est exposée 1 000 h en brouillard salin (norme ASTM B117). Le placage présente de rares piqûres ; celles-ci s'arrêtent au contact de l'aluminium lithium, comme cela est représenté à la figure 2. On remarque également la bonne qualité de la liaison âme-placage.

## Exemple 3

Un alliage 2091 de composition (en poids %) : 2,0 % Li ; 2,1 % Cu ; 1,45 % Mg ; 0,07 Zr ; 0,05 Fe ; 0,03 Si, reste Al, est coulé en plateau de 1 500 kg et de section $800 \times 300$ mm², homogénéisé 24 h à 520 °C, ébouté tête et pied, scalpé de 15 mm par face, oxydé 24 h à 520 °C en four à air, plateau vertical, refroidi à l'air calme, immergé dans un bain d'acide nitrique froid (50 % en vol. d'acide à 36 °B) pendant 5 mn, rincé à l'eau, immergé dans un bain de soude de concentration 75 g/l à la température de 40 °C pendant 3 mn (attaque de 8 µm de profondeur), rincé à l'eau, neutralisé 10 min en bain d'acide nitrique froid (50 % en volume d'acide 36 °B), enfin rincé à l'eau froide.

Deux couvertures de 7072 selon la désignation de l'Aluminium Association (une par grande face) sont déposées sur le plateau, maintenues par cloutage à une extrémité de plateau en 2091. Le 7072 a une épaisseur de 20 mm par couverture. L'ensemble est réchauffé 12 heures à 470 °C en four à air puis laminé à chaud jusqu'à 3,6 mm, enroulé en bobine, recuit 24 h à 430 °C, laminé à froid en continu jusqu'à 1,2 mm.

Une partie des tôles est à nouveau laminée en tôle à tôle jusqu'à 0,8 mm.

Ces tôles minces sont alors mises en solution 15 min à 530 °C et trempées à l'eau froide et revenues 24 h à 170 °C. L'absence de cloques et de décollement après la trempe sur faible épaisseur confirme la bonne qualité mécanique de placage. Ces tôles minces exposées 1 000 h en brouillard salin (norme ASTM B-117) présentent une bonne résistance à la corrosion (voir fig. 3), avec une protection galvanique efficace.

Le procédé selon l'invention s'applique à tous les alliages d'Al contenant du Li, en particulier aux alliages contenant du Li, en particulier aux alliages contenant (en poids %) :

Li : 0,3 à 4 %
Cu : 0 à 5 %
Mg : 0 à 7 %
Zn : 0 à 15 %
Zr : 0 à 0,2 %
Mn : 0 à 1,0 %
Cr : 0 à 0,3 %
Nb : 0 à 0,2 %
Ni : 0 à 0,5 %
Fe : 0 à 0,5 %
Si : 0 à 0,5 %
Autres éléments : $\leqslant$ 0,05 %
Reste Al,

avec de préférence :

$$\frac{\% \, Zn}{30} + \frac{\% \, Mg}{18} + \frac{\% \, Li}{4,2} + \frac{\% \, Cu}{7} \leqslant 1$$

en vue d'obtenir une déformabilité à chaud acceptable.

## Revendications

1. Procédé de placage par colaminage à chaud d'une âme d'un alliage d'Al contenant du Li avec une couverture en Al commercialement pur ou un alliage d'Al exempt de Li, caractérisé en ce qu'avant le chauffage précédant le colaminage, l'alliage d'âme en alliage d'Al contenant du Li est soumis à une oxydation à une température comprise entre 450 °C et 550 °C, de manière à ce que la profondeur de la zone appauvrie en Li soit comprise entre 50 et 700 μm et puis en ce qu'il est traité chimiquement et/ou mécaniquement de manière à éliminer les produits d'oxydation et à ce que, au cours de ce dernier traitement, la perte superficielle d'alliage soit au plus de 30 μm.

2. Procédé selon la revendication 1, caractérisé en ce que l'oxydation a lieu entre 500 et 530 °C.

3. Procédé selon revendication 1 ou 2, caractérisé en ce que, au cours du traitement chimique ou mécanique, la profondeur d'alliage éliminée est inférieure à 10 μm.

4. Procédé selon l'une des revendications 1 à 3, caractérisé en ce que la profondeur de la zone appauvrie en Li est comprise entre 100 et 500 μm.

5. Procédé selon la revendication 4, caractérisé en ce que la profondeur de la zone appauvrie en Li est comprise entre 200 et 500 μm.

6. Procédé selon revendications 1 à 5, caractérisé en ce que le chauffage avant colaminage est effectué à une température n'excédant pas 500 °C et une durée n'excédant pas 24 heures.

7. Procédé selon la revendication 6, caractérisé en ce que le chauffage est effectué à une température inférieure 450 °C pendant une durée inférieure à 12 heures.

8. Procédé selon l'une des revendications 1 à 7 caractérisé en ce que l'alliage d'Al de l'âme contient (en poids %) :

Li : 0,3 à 4
Cu : 0 à 5
Mg : 0 à 7
Zn : 0 à 15
Zr : 0 à 0,2
Mn : 0 à 1
Cr : 0 à 0,3
Nb : 0 à 0,2
Ni : 0 à 0,5
Fe : 0 à 0,5
Si : 0 à 0,5
Autres éléments : ≤ 0,05 chacun
Reste Al

avec de préférence :

$$\frac{\% \, Zn}{30} + \frac{\% \, Mg}{18} + \frac{\% \, Li}{4,2} + \frac{\% \, Cu}{7} \leqslant 1$$

## Claims

1. A process for plating by hot co-rolling of an Al alloy core containing Li with a plating of commercially pure Al or an Al alloy which is free of Li, characterised in that, prior to the heating operation preceding the co-rolling operation, the core alloy, of Al alloy containing Li, is subjected to an oxidation operation at a temperature of between 450 °C and 550 °C, such that the depth of the zone in which the Li content is reduced is between 50 and 700 μm and then that it is treated chemically and/or mechanically so as to eliminate the oxidation products and so that in the course of said last treatment the surface loss of alloy is at most 30 μm.

2. A process according to claim 1 characterised in that the oxidation operation takes place at between 500 and 530 °C.

3. A process according to claim 1 or claim 2 characterised in that in the course of the chemical or mechanical treatment the depth of alloy removed is less than 10 μm.

4. A process according to one of claims 1 to 3 characterised in that the depth of the zone in which the Li content is reduced is between 100 and 500 μm.

5. A process according to claim 4 characterised in that the depth of the zone in which the Li content is reduced is between 200 and 500 μm.

6. A process according to claims 1 to 5 characterised in that the heating operation prior to co-rolling is effected at a temperature which does not exceed 500 °C and for a period which does not exceed 24 hours.

7. A process according to claim 6 characterised in that the heating operation is effected at a temperature of less than 470 °C (and preferably 450 °C) for a period of less than 12 hours.

8. Process according to one of claims 1 to 7 characterised in that the Al alloy core contains (in % by weight) :

Li : 0.3 to 4
Cu : 0 to 5
Mg : 0 to 7
Zn : 0 to 15
Zr : 0 to 0.2
Mn : 0 to 1.0
Cr : 0 to 0.3
Nb : 0 to 0.2
Ni : 0 to 0.5
Fe : 0 to 0.5
Si : 0 to 0.5
Other elements : $\leqslant$ 0.05 each
Balance Al
with preferably :

$$\frac{\%\,Zn}{30} + \frac{\%\,Mg}{18} + \frac{\%\,Li}{4.2} + \frac{\%\,Cu}{7} \leqslant 1$$

**Patentansprüche**

1. Verfahren zum Plattieren eines Kerns aus einer Li enthaltenden Al-Legierung mit einem Überzug aus handelsüblich reinem Al oder einer Li-freien Al-Legierung durch Warmzusammenwalzen, dadurch gekennzeichnet, daß vor der dem Zusammenwalzen vorausgehenden Erhitzung die Kernlegierung aus der Li enthaltenden Legierung einer Oxidation bei einer Temperatur im Bereich von 450 °C bis 550 °C derart unterworfen wird, daß die Tiefe der an Li verarmten Zone im Bereich von 50 bis 700 μm ist, und daß sie dann chemisch und/oder mechanisch derart behandelt wird, daß die Oxidationsprodukte entfernt werden und daß im Verlauf dieser letzten Behandlung der Legierungsoberflächenverlust höchstens 30 μm ist.

2. Verfahren nach Anspruch 1, dadurch gekennzeichnet, daß die Oxidation zwischen 500 und 530 °C stattfindet.

3. Verfahren nach Anspruch 1 oder 2, dadurch gekennzeichnet, daß die im Verlauf der chemischen oder mechanischen Behandlung entfernte Legierungstiefe unter 10 μm ist.

4. Verfahren nach einem der Ansprüche 1 bis 3, dadurch gekennzeichnet, daß die Tiefe der an Li verarmten Zone im Bereich von 100 bis 500 μm ist.

5. Verfahren nach Anspruch 4, dadurch gekennzeichnet, daß die Tiefe der an Li verarmten Zone im Bereich von 200 bis 500 μm ist.

6. Verfahren nach den Ansprüchen 1 bis 5, dadurch gekennzeichnet, daß die Erhitzung vor dem Zusammenwalzen bei einer 500 °C nicht überschreitenden Temperatur und einer 24 Stunden nicht überschreitenden Dauer durchgeführt wird.

7. Verfahren nach Anspruch 6, dadurch gekennzeichnet, daß die Erhitzung bei einer Temperatur unter 450 °C während einer Dauer unter 12 Stunden durchgeführt wird.

8. Verfahren nach einem der Ansprüche 1 bis 7, dadurch gekennzeichnet, daß die Al-Legierung des Kerns (in Gew.%)

Li : 0,3-4
Cu : 0-5
Mg : 0-7
Zn : 0-15
Zr : 0-0,2
Mn : 0-1
Cr : 0-0,3
Nb : 0-0,2
Ni : 0-0,5
Fe : 0-0,5
Si : 0-0,5

Andere Elemente : je $\leqslant 0,05$
Rest Al,
mit vorzugsweise :

$$\frac{\% \, Zn}{30} + \frac{\% \, Mg}{18} + \frac{\% \, Li}{4,2} + \frac{\% \, Cu}{7} \leqslant 1$$

enthält.

6

FIG.1

concentration C (%)

distance latérale (microns)

Li

Mg

EP 0 236 245 B1

A5

8090

50 $\mu$m

**FIG.2**

AZ1

AZ1

2091

100 $\mu$m

**FIG.3**

2